**Europäisches Patentamt**

**European Patent Office**

**Office européen des brevets**

(11) Veröffentlichungsnummer: **0 268 056 B1**

(12) **EUROPÄISCHE PATENTSCHRIFT**

(45) Veröffentlichungstag der Patentschrift: **29.01.92**

(51) Int. Cl.⁵: **B25J 19/06**

(21) Anmeldenummer: **87114598.3**

(22) Anmeldetag: **06.10.87**

(54) **Sicherheitskupplung für einen Roboter.**

(30) Priorität: **30.10.86 DE 3637013**

(43) Veröffentlichungstag der Anmeldung:
**25.05.88 Patentblatt 88/21**

(45) Bekanntmachung des Hinweises auf die
Patenterteilung:
**29.01.92 Patentblatt 92/05**

(84) Benannte Vertragsstaaten:
**CH DE FR GB IT LI SE**

(56) Entgegenhaltungen:
**EP-A- 0 133 981**
**EP-A- 0 162 220**
**US-A- 4 500 065**

(73) Patentinhaber: **SIEMENS AKTIENGESELL-
SCHAFT**
**Wittelsbacherplatz 2**
**W-8000 München 2(DE)**

(72) Erfinder: **Berner, Klaus, Dipl.-Ing.**
**Bachstrasse 15**
**W-6838 Reilingen(DE)**

## Beschreibung

Die Erfindung bezieht sich auf eine Kupplung zum Befestigen eines Werkzeuges an einem Betätigungsarm eines Handhabungsroboters, wobei die Kupplung gegen Überlastung durch Kippmomente aus zwei in axialer Richtung federnd gegeneinander verspannten Kupplungsteilen besteht.

Eine derartige Kupplung ist z.B. durch die DE-OS 32 41 132 bekannt geworden. Die beiden Kupplungsteile sind fest zum einen mit dem Roboterarm und zum anderen mit dem Werkzeug oder dem Werkzeughalter verbunden. Zwischen den beiden Kupplungsteilen ist eine Axialdruckfeder eingespannt, die mittels Haltebolzen zusammengehalten sind. Beim Auftreten eines Kippmomentes, das über die Wirkung der Federvorspannung hinausgeht, wird die Feder einseitig zusammengedrückt, so daß die Werkzeugachse gegenüber der Achse des Roboterarms abgeknickt werden kann. Ein interner Sensor bewirkt daraufhin über ein Impulskabel den Stillstand des Roboters. Nach dem Entlasten des Werkzeuges stellt sich dieses in seine Ausgangslage zurück.

Ferner ist durch die US-A-4,500,065 eine Kupplung bekannt, bei der in einem der Kupplungsteile als Spannelemente für die beiden Kupplungsteile radial wirkende Spannkuppen vorgesehen sind, die in konischen Vertiefungen des anderen Kupplungsteiles verrasten. Die Vertiefungen sind in Einsätzen ausgebildet, die in entsprechende Bohrungen des Kupplungsteils eingesetzt sind. Hierbei sind die Bohrungen zur Bildung von Anschlagschultern nach innen erweitert. Derartige Bohrungen lassen sich nur mit erheblichen Schwierigkeiten herstellen.

Der Erfindung liegt die Aufgabe zugrunde, die Herstellung der Kupplung zu vereinfachen und die Grenzwerte für die Verdrehund Kippmomente besser dosierbar einstellen zu können.

Diese Aufgabe wird durch die Erfindung gemäß Anspruch 1 gelöst. Danach sind nun die Rastschrägen Teil einer umlaufenden Schulter, die in einem einfachen Arbeitsgang z.B. durch einfaches Hinterdrehen hergestellt werden kann. Durch das separate Zentrierstück mit der konischen Senkung wird eine Verdrehsicherung erreicht, die fein dosierbar auf das erforderliche Drehmoment eingestellt werden kann. Nach dem Stand der Technik wird die Verdrehsicherung in allen Rastkuppen realisiert, wodurch die Verdrehmomente und die Kippmomente voneinander nicht entkoppelt werden können. Durch die separate Verdrehsicherung nach der Erfindung lassen sich die Grenzwerte für die Verdrehmomente und die Kippmomente unabhängig voneinander auf den jeweiligen Anwendungsfall einstellen. Die sich nach innen öffnende Bohrung des Zentrierstücks wird vor dem Einsetzen hergestellt. Durch Abschrägen einer überstehenden Anschlagschulter des Zentrierstücks kann die entsprechende Rastkuppe beim Zusammenfügen der Kupplungsteile über diese Erhöhung hinweggleiten. Dadurch wird eine Innensenkung für das Zentrierstück überflüssig.

Vorteilhafte Weiterbildungen der Erfindung sind in den Ansprüchen 2 bis 9 gekennzeichnet:
Die rillenförmigen Auslaufschrägen nach Anspruch 2 ermöglichen es, die verdrehsichernde Spannkuppe beim Zusammensetzen der Kupplungshälften genau auf das Zentrierstück auszurichten, ohne daß sich die Anlagefläche der beiden Kupplungsteile erheblich verringert.

Durch die Weiterbildung nach Anspruch 3 kann die Verdrehsicherung unabhängig von den übrigen Spannkuppen auf ein geeignetes Drehmoment eingestellt werden.

Die Weiterbildungen nach den Ansprüchen 4 und 5 ermöglichen die Einstellung des Drehmomentes in gleicher Weise wie die des Kippmomentes, was sich konstruktiv einfach und raumsparend verwirklichen läßt.

Durch die Weiterbildungen nach den Ansprüchen 6 bis 8 kann der Spannkeil ebenso wie der Spannkonus konzentrisch in der Kupplung angeordnet werden, was die Herstellung und Betätigung erleichtert und den Raumbedarf verringert. Gleiches gilt für die Weiterbildung nach Anspruch 9. Die beiden zueinander fluchtenden Einstellkeile sind unabhängig voneinander in der gleichen Richtung verschiebbar.

Im folgenden wird die Erfindung anhand eines in der Zeichnung dargestellten Ausführungsbeispieles näher erläutert:

Fig. 1 zeigt einen transversalen Schnitt durch eine Kupplung zum Verbinden eines Werkzeuges mit einem Roboterarm,

Fig. 2 einen Schnitt durch die Kupplung entlang der Linie II-II in Fig. 1,

Fig. 3 einen Schnitt durch die Kupplung entlang der Linie III-III in Fig. 1.

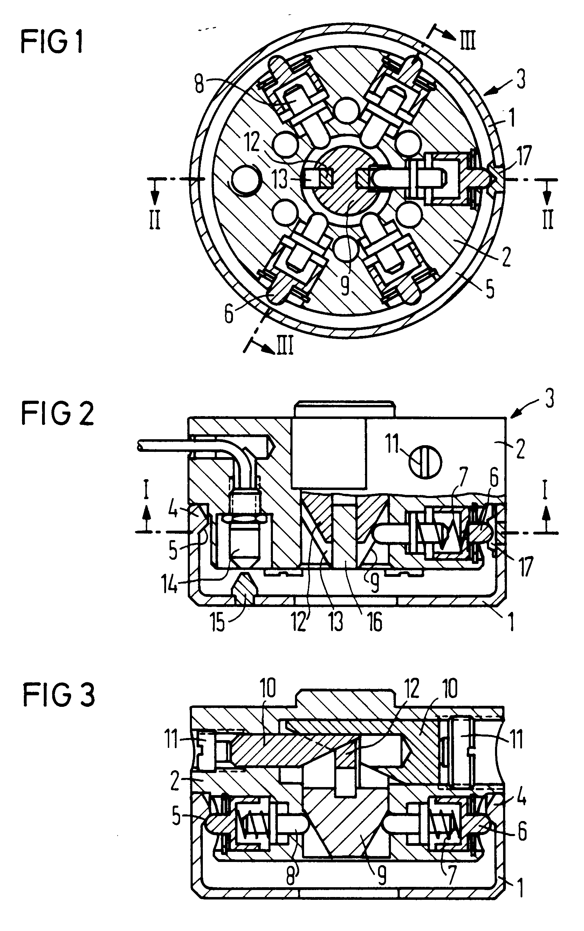

Nach den Fig. 1, 2 und 3 besteht eine Kupplung 3 für einen Roboter aus einem ersten Kupplungsteil 1 und einem zweiten Kupplungsteil 2. An dem ersten Kupplungsteil 1 kann z.B. ein Greifer für Werkstücke befestigt werden. Das zweite Kupplungsteil wird an einem Flansch des Roboterarms angeschraubt.

Die beiden Kupplungsteile weisen ringförmige äußere Stirnflächen auf, mit denen sie unter axialer Vorspannung aneinanderliegen. Das erste Kupplungsteil 1 ist topfartig ausgebildet und mit einem nach innen weisenden umlaufenden Randwulst 4 versehen. Dieser weist auf der der Stirnfläche abgewandten Seite eine hohlkegelig umlaufende Spannschräge 5 auf, gegen die radial von innen her stirnseitig abgerundete Spannkuppen 6 mittels Axialdruckfedern 7 gedrückt werden. Aufgrund der schrägen Neigung der Spannschräge 5 entsteht eine axiale Kraftkomponente, durch die die beiden Stirnflächen der Kupplungsteile 1 und 2 zusammengedrückt werden. Die Axialdruckfedern 7 sind an ihrem anderen Ende an Spannstiften 8 abgestützt, die sich ihrerseits an einem zentralen axial verschiebbaren Spannkonus 9 abstützen. Die Spannkuppen 6, Axialdruckfedern 7 und Spannstifte 8 sind in dem zweiten Kupplungsteil 2 gelagert, das auch den gesamten Einstellmechanismus aufnimmt.

Durch axiale Verschiebung des Spannkonus 9 werden die Spannstifte 7 verstellt und die Vorspannung der Spannkuppen 6 verändert. Der Spannkonus 9 wird durch einen Einstellkeil 10 betätigt, der mittels einer Einstellschraube 11 radial verschiebbar ist. Die Einstellschraube 11 ist aus Platzgründen als Madenschlitzschraube ausgebildet, deren den Einstellkeil 10 berührende Stirnfläche im Durchmesser erheblich verringert ist. Auf diese Weise wird eine gegenseitige punktartige Anlage erzielt, was die Genauigkeit der Einstellung begünstigt.

Eine der Spannkuppen 6 ist nicht mit der Spannschräge 5 verspannt, sondern mit seiner kugelförmigen Stirnfläche in eine koaxiale kegelige Senkung eines Zentrierstücks 17 gedrückt, das in die Außenwand des ersten Kupplungsteiles 1 eingesetzt ist. Diese Anordnung stellt eine drehmomentbegrenzende Verdrehsicherung dar. Bei Zug- und D rehmoment wird die betreffende Spannkuppe gegen die Axialdruckfeder zurück- und aus der Senkung herausgedrückt. Die beiden Kupplungshälften sind dann abgesehen von den restlichen Reibungskräften frei gegeneinander verdrehbar. Der zugehörige Spannstift 8 sitzt mit seinem der Spannkuppe 6 abgewandten Ende nicht an dem Spannkegel 9 an, sondern an einem Spannkeil 12, der zu beiden Seiten eines Stützsteges 16 in Axialschlitzen 13 des Spannkonus 9 in gleicher Richtung wie dieser selbst verschiebbar gelagert ist. Der Spannkeil 12 ist an seinem anderen Ende durch einen weiteren radial verschiebbaren Einstellkeil 10 verstellbar.

Ein Tastelement 14 ist im zweiten Kupplungsteil 2 befestigt und auf einen Gegenkegel 15 gerichtet, der im ersten Kupplungsteil 1 gehalten ist. Eine unzulässige Lageänderung der beiden Kupplungsteile zueinander wird von dem Tastelement 14 wahrgenommen und über eine elektrische Leitung der Roboterstörung signalisiert.

**Patentansprüche**

1.   Kupplung (3) zum Befestigen eines Werkzeuges an einem Betätigungsarm eines Handhabungsroboters, wobei die Kupplung (3) gegen Überlastung durch Kippmomente aus zwei in axialer Richtung federnd gegeneinander verspannten Kupplungsteilen (1, 2) besteht, von denen eines fest mit dem Betätigungsarm des Roboters und ein anderes fest mit dem Werkzeug verbunden ist, wobei in einem der Kupplungsteile (2) als Spannelemente für die beiden Kupplungsteile radial wirkende Spannkuppen (6) vorgesehen sind, die entsprechend kurze Spannschrägen (5) des anderen Kupplungsteiles (1) hintergreifen und federnd an diesen anliegen, wobei die Spannkuppen (6) über die Spannschrägen (5) hinaus auslenkbar sind, wobei sich an die Spannschrägen (5) von den Spannkuppen (6) wegweisende koaxiale Gleitflächen für die Spannkuppen (6) anschließen, wobei sich an die kurzen Gleitflächen in der Spannrichtung der Spannkuppen sich öffnende Auslaufschrägen anschließen, wobei die von innen nach außen wirkenden Spannkuppen (6) von Axialdruckfedern (7) belastet sind, die sich mit ihren anderen Enden an radial verschiebbaren Spannstiften (8) abstützen, die durch einen in Axialrichtung der Kupplung (3) verschiebbaren Spannkonus (9) betätigbar sind, **dadurch gekennzeichnet,** daß der Spannkonus mittels zumindest eines radial verschiebbaren Einstellkeiles (10) verstellbar ist, daß die Spannschrägen (5) als umlaufende gemeinsame hohlkegelige Schulter einer Randwulst (4) ausgebildet sind, daß die koaxialen Gleitflächen eine gemeinsame zylindrische Fläche bilden und daß zur Verdrehsicherung bei einer der Spannkuppen (6) die Spannschräge Teil einer radialen kegelförmigen Senkung eines separaten Zentrierstücks (17) ist.

2.   Kupplung nach Anspruch 1, **dadurch gekennzeichnet,** daß die Auslaufschrägen als einzelne Rillen ausgebildet sind.

3.   Kupplung nach Anspruch 1 oder 2, **dadurch gekennzeichnet,** daß die Vorspannung der Axialdruckfeder für die in die Senkung eingreifende Spannkuppe (6) durch einen separaten Einstellmechanismus veränderbar ist.

4.   Kupplung nach Anspruch 3, **dadurch gekennzeichnet,** daß sich der Spannstift (8) für die verdrehsichernde Spannkuppe (6) an einem in gleicher Weise wie der Spannkonus (9) wirkenden Spannkeil (12) abstützt.

5.   Kupplung nach Anspruch 4, **dadurch gekennzeichnet,** daß der Spannkeil (12) mittels eines weiteren radial verschiebbaren Einstellkeils (10) verstellbar ist.

**6.** Kupplung nach Anspruch 4 oder 5, **dadurch gekennzeichnet,** daß der Spannkeil (12) in zumindest einem Axialschlitz (13) des Spannkonus (9) geführt ist.

**7.** Kupplung nach Anspruch 6, **dadurch gekennzeichnet,** daß der Spannkeil (12) innerhalb der Mantelflächen des Spannkonus (9) angeordnet ist.

**8.** Kupplung nach Anspruch 7, **dadurch gekennzeichnet,** daß zwei diametrale Axialschlitze (13) vorgesehen sind, die durch einen Stützsteg (16) des Spannkonus (9) voneinander getrennt sind und daß der Spannkeil (12) den Stützsteg (16) gabelartig umgreift.

**9.** Kupplung nach einem der vorhergehenden Ansprüche, **dadurch gekennzeichnet,** daß die beiden Einstellkeile (10) diametral gegenüberliegend angeordnet sind und sich wechselseitig mit ihren inneren Enden durchdringen.

**Claims**

**1.** Coupling (3) for securing a tool on an actuating arm of a handling robot, the coupling (3) comprising, to counteract overloading by tilting moments, two coupling parts (1, 2) which are clamped resiliently against one another in the axial direction, one of which is firmly connected to the actuating arm of the robot and another of which is firmly connected to the tool, radially acting rounded clamping heads (6) being provided in one of the coupling parts (2) as clamping elements for the two coupling parts, the said rounded clamping heads engaging behind correspondingly short clamping bevels (5) of the other coupling part (1) and resting resiliently against these, the rounded clamping heads (6) being deflectable outwards via the clamping bevels (5), coaxial sliding faces for the rounded clamping heads (6), the said sliding faces facing away from the rounded clamping heads (6), adjoining the clamping bevels (5), run-out bevels opening in the clamping direction of the rounded clamping heads adjoining the short sliding faces, the rounded clamping heads (6), which act from the inside towards the outside, being loaded by axial compression springs (7) which are supported by their other ends against radially displaceable clamping pins (8) which are actuable by a clamping cone (9) displaceable in the axial direction of the coupling (3), characterised in that the clamping cone can be adjusted by means of at least one radially displaceable adjusting wedge (10), in that the clamping bevels (5) are designed as encircling, common, internally tapered shoulders of an edge bead (4), in that the coaxial sliding faces form a common cylindrical face, and in that to provide a rotation safeguard, the clamping bevel in the case of one of the rounded clamping heads (6) is part of a radial conical hollow of a separate centring piece (17).

**2.** Coupling according to Claim 1, characterised in that the run-out bevels are designed as individual grooves.

**3.** Coupling according to Claim 1 or 2, characterised in that the prestress of the axial compression spring for the rounded clamping head (6) engaging in the hollow can be altered by means of a separate adjusting mechanism.

**4.** Coupling according to Claim 3, characterised in that the clamping pin (8) for the rounded clamping head (6) providing the rotation safeguard is supported against a clamping wedge (12) acting in the same way as the clamping cone (9).

**5.** Coupling according to Claim 4, characterised in that the clamping wedge (12) can be adjusted by means of a further radially displaceable adjusting wedge (10).

**6.** Coupling according to Claim 4 or 5, characterised in that the clamping wedge (12) is guided in at least one axial slot (13) of the clamping cone (9).

**7.** Coupling according to Claim 6, characterised in that the clamping wedge (12) is arranged inside the curved surfaces of the clamping cone (9).

**8.** Coupling according to Claim 7, characterised in that two diametrical axial slots (13) are provided, which are separated from one another by a supporting web (16) of the clamping cone (9), and in that the clamping wedge (12) engages round the supporting web (16) like a fork.

**9.** Coupling according to one of the preceding claims, characterised in that the two adjusting wedges (10) are arranged diametrically opposite and penetrate each other with their inner ends.

**Revendications**

1. Accouplement (3) pour la fixation d'un outil à un bras d'actionnement d'un robot de manipulation, l'accouplement (3) étant constitué, pour résister à une surcharge due à des moments de basculement, par deux pièces d'accouplement (1,2), serrées élastiquement l'une contre l'autre dans la direction axiale et dont l'une est raccordée rigidement au bras de fixation du robot et dont l'autre est raccordée rigidement à l'outil, et dans lequel dans l'une des pièces d'accouplement (2), il est prévu, comme éléments de serrage pour les deux pièces d'accouplement, des tétons de serrage (6) agissant radialement, qui s'engagent derrière de courts biseaux de serrage correspondants (5) de l'autre pièce d'accouplement (1) et s'appliquent élastiquement contre ces biseaux, les tétons de serrage (6) pouvant être déviés audelà des biseaux de serrage (5), des surfaces coaxiales de glissement, qui sont prévues pour les tétons de serrage (6) et s'écartent de ces dernières, se raccordant aux biseaux de serrage (5), des biseaux de dégagement, qui s'ouvrent dans la direction de serrage des tétons de serrage, se raccordant aux courtes surfaces de glissement, les tétons de serrage (6), qui agissent de l'intérieur vers l'extérieur, étant chargées par des ressorts de pression axiaux (7), qui prennent appui par leurs autres extrémités sur des tiges de serrage (8) déplaçables radialement et qui peuvent être actionnées par un cône de serrage (9) déplaçable dans la direction axiale de l'accouplement (3),
caractérisé par le fait
que le cône de serrage est déplaçable au moyen d'au moins un coin de réglage (10) déplaçable radialement, que les biseaux de serrage (5) sont agencés sous la forme d'épaulements circonférentiels coniques creux communs d'un rebord marginal (4), que les surfaces coaxiales de glissement forment une surface cylindrique commune et que pour le blocage en rotation, pour l'un des tétons de serrage (6), le biseau de serrage fait partie d'un renfoncement radial conique d'un élément séparé de centrage (17).

2. Accouplement suivant la revendication 1, caractérisé par le fait que les biseaux de dégagement sont réalisés sous la forme de rainures individuelles.

3. Accouplement suivant la revendication 1 ou 2, caractérisé par le fait que la précontrainte des ressorts de pression axiaux pour le téton de serrage (6) qui s'engage dans le renfoncement, peut être modifiée au moyen d'un mécanisme de réglage distinct.

4. Accouplement suivant la revendication 3, caractérisé par le fait que la tige de serrage (8) prévue pour le téton de serrage (6) qui réalise un blocage en rotation, prend appui sur un coin de serrage (12) qui agit de la même manière que le cône de serrage (9).

5. Accouplement suivant la revendication 4, caractérisé par le fait que le coin de serrage (12) est déplaçable au moyen d'un autre coin de réglage (10) déplaçable radialement.

6. Accouplement suivant la revendication 4 ou 5, caractérisé par le fait que le coin de serrage (12) est guidé dans au moins une fente axiale (13) du coin de serrage (9).

7. Accouplement suivant la revendication 6, caractérisé par le fait que le coin de serrage (12) est disposé à l'intérieur des surfaces enveloppes du cône de serrage (9).

8. Accouplement suivant la revendication 7, caractérisé par le fait qu'il est prévu deux fentes axiales et diamétrales (13), qui sont séparées l'une de l'autre par une barrette d'appui (16) du cône de serrage (9) et que le coin de serrage (12) entoure, à la manière d'une fourche, la barrette d'appui (16).

9. Accouplement suivant l'une des revendications précédentes, caractérisé par le fait que les deux coins de réglage (10) sont situés dans des positions diamétralement opposées et s'interpénètrent par leurs extrémités intérieures.

FIG 1

FIG 2

FIG 3